# EUROPEAN PATENT APPLICATION

(11) **EP 4 464 591 A1**
(43) Date of publication of application: **20.11.2024**
(21) Application number: 23305791.8
(22) Date of filing: 17.05.2023
(51) Int. Cl.: B63B 35/44, B63B 73/40, B63B 75/00, B63B 39/03, B63B 43/06

(54) **FLOATING OFFSHORE PLATFORM COMPRISING A BEAM WITH AN INTEGRATED TANK DELIMITED IN TWO TUBES OF THE BEAM**

(71) Applicant: TOTALENERGIES ONETECH, 92400 Courbevoie (FR)
(72) Inventor: RABOIN, Jean-Christophe, 92078 PARIS LA DEFENSE (FR); DENEUVILLE, Loïc, 92078 PARIS LA DEFENSE (FR)
(74) Representative: Lavoix

(57) **Abstract**

The floating offshore platform (2) comprises a support structure (4) having a beam (8) configured for extending between first and second structural elements (6, 7), the beam (8) being formed of several tubes (10) connected together and comprising a tank (12) delimited within at least two tubes (10) connected such that the individual internal volumes of said at least two tubes (10) are in fluid communication, and at least three connections (16) each configured for mechanically connecting an end of one tube (10) of the beam (8) to one of the first and second structural elements (7), wherein each connection (16) with the first structural element (6) is a bolted flange connection (16) and/or each connection (16) with the second structural element (7) is a bolted flange connection (16).

## Description

The present invention relates to the technical field of floating offshore platforms, notably floating offshore platforms for wind turbines.

A floating offshore platform comprises a support structure which is configured for supporting equipment of the offshore platform including e.g. a wind turbine. The support structure comprises for example a plurality of metal structural elements welded together, the structural elements comprising for example columns connected by beams extending transversely between the columns for maintaining a transverse spacing between the columns. Each column may define a floater, i.e. provide buoyancy.

It is possible to provide a tank integrated in a tube of a beam of tubular construction. The tank is for example fluidly connected to fluid components supported by the support structure.

One of the aims of the invention is to propose floating offshore platform which is a compact and lightweight naval construction with simple and robust design along with ease of installation, operation and maintenance.

To this end, the invention proposes a floating offshore platform comprising a support structure, the support structure comprising a beam configured for extending between a first structural element and a second structural element of the support structure, the beam being formed of several tubes connected together, the beam comprising a tank for storing fluid delimited within at least two tubes of the beam, said at least two tubes being connected such that the individual internal volumes of said at least two tubes are in fluid communication, and at least three connections, each connection being configured for mechanically connecting an end of one tube of the beam to one of the first structural element and the second structural element, wherein each connection with the first structural element is a bolted flange connection and/or each connection with the second structural element is a bolted flange connection.

The beam of tubular construction integrating a tank provides a compact and lightweight naval construction with simple and robust design, with ease of installation, operation and maintenance.

The tank delimited in at least two tubes of the beam connected together provides a large storage capacity and increases the fluid connection possibilities between the tank on the one hand and the first structural element and the second structural element on the other hand.

The tank is for example connected to fluid equipment via one end of one of the at least two tubes delimiting the tank and via one end of another one of the at least two tubes delimiting the tank.

In specific embodiments, the floating offshore platform comprises one or several of the following features, taken individually or according to any technically feasible combination:
- the beam comprise one or several primary tubes, each primary having one end to be connected to the first structural element and/or one end to be connected to the second structural element;
- the tank is delimited in at least one primary tube;
- the beam comprises at least one primary tube in which the tank is not delimited;
- the beam comprises two primary tubes arranged one below the other, each of said two primary tubes having one end connected to the first structural element and one end connected to the second structural element;
- the beam comprise at least one secondary tube, the two ends of each secondary tube being connected to other tubes of the beam;
- the beam comprise at least one secondary tube having ends connected to two primary tubes;
- the tank is delimited in at least one secondary tube;
- the tank is fluidly connected to the first structural element via a connection connecting the beam to the first structural element and/or the tank is fluidly connected to the second structural element via a connection connecting the beam to the second structural element;
- the connections comprise an upper first connection and a lower first connection connecting the beam to the first structural element;
- the tank is fluidly connected to the first structural element via the upper first connection and/or via the lower first connection.;
- the connections comprise an upper second connection and a lower second connection connecting the beam to the second structural element;
- the tank is fluidly connected to the second structural element via the upper second connection and/or via the lower second connection;
- each bolted flange connection is provided with a sealing assembly for sealing the bolted flange connection.

The invention also relates to a wind turbine assembly comprising a floating offshore platform as defined above and a wind turbine supported by the floating offshore platform.

The invention and its advantages will be better understood upon reading the following description that is given solely by way of non-limiting example and with reference to appended drawings, in which:
- Figures 1 - 6 are a partial side views of a floating offshore platform comprisiong a support structure having a beam extending between two structural elements according to different examples; and
- Figure 7-11 are sectional views of structural assemblies comprising a bolted flange connection between a tube of the beam and a structural element of a support structure according to different examples.

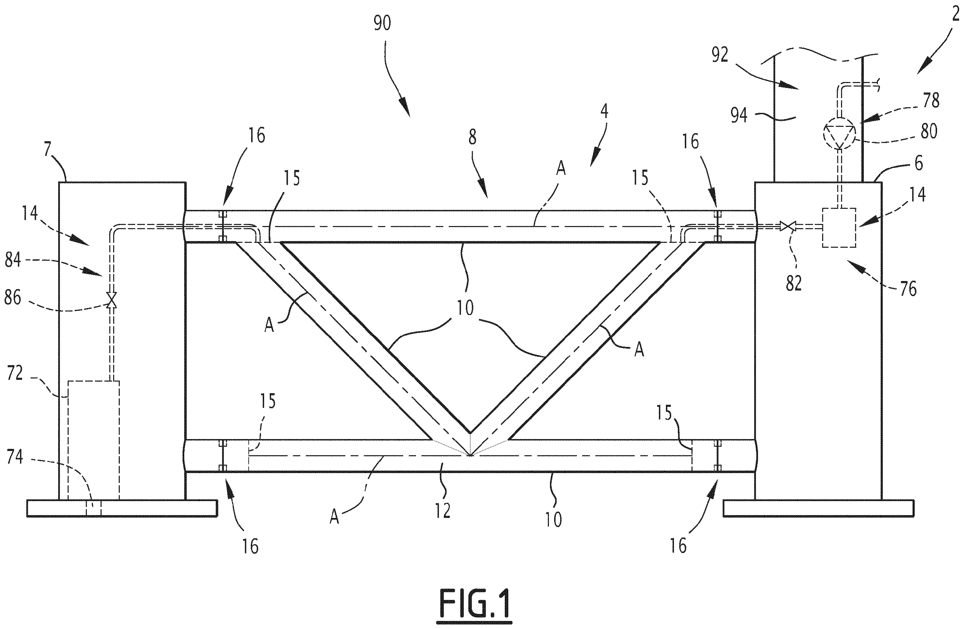

As illustrated on Figure 1, a floating offshore platform 2 comprises a support structure 4 comprising a first structural element 6 and a second structural element 7 spaced from one another and a beam 8 extending between the two structural elements 6 for connecting them together.

The support structure 4 is configured for supporting equipment of the floating offshore platform 2 and/or a top-side of the floating offshore plateform 2.

Each of the first structural element 6 and the second structural element 7 is for example a column. Each of the first structural element 6 and the second structural element 7 is preferably made of metal.

At least one or each of the first and second structural elements 6 defines for example a floater. Such structural element has a positive buoyancy.

The beam 8 is of tubular construction. The beam 8 is formed of several tubes 10 which are connected together. Each tube 10 is preferably made of metal. The tubes 10 of the beam 8 are preferably welded together. Each tube 10 extends preferably along a tube axis A.

The external diameter of each tube 10 of the beam 8 is for example comprised between 1 meter and 6 meters, in particular between 2 meters and 5 meters.

The beam 8 is preferably submersible. By "submersible", it is meant that the beam 8 is partly or completely immerged when the floating offshore platform 2 is operated offshore.

The support structure 4 comprises a tank 12 for storing a fluid, the tank 12 being delimited in at least two tubes 10 of the beam 8. The tank 12 is thus "integrated" in the beam 8. The fluid is for example a liquid or a gas, in particular a pressurized gas, for example pressurized air.

The tubes 10 delimiting the tank 12 are connected together such that the individual internal volumes of said tubes 10 are connected and delimit a single common internal volume defining the tank 12. The tubes 10 delimiting the tank 12 are for example connected together via open welded connections.

Two tubes 10 connected together and delimiting the tank 12 are connected to each other at a non-zero angle. The tube axes A of the two tubes 10 define a non-zero angle between them.

The tank 12 is for example fluidly connected to fluid components 14 supported by the support structure 4, the fluid components 14 being located for example on the first structural element 6 and/or on the second structural element 7.

Each fluid component 14 is configured to feed the tank 12 with fluid and/or to bed fed with fluid from the tank 12.

Each fluid component 14 is for example a fluid circuit, a pipe, a pump, a valve, a pressure regulator, a flow rate regulator, a fluid reservoir, a ballast, a fluid intake or a fluid outtake.

The tank 12 is for example delimited within the tubes 10 by internal partition walls 15 extending across said tubes 10. The internal partition walls 15 are preferably distant from the connections of the tubes 10 to the first and second structural elements 6, 7.

The beam 8 comprises primary tubes 10, each primary tube 10 having at least one end connected to the first structural element 6 or to the second structural element 7. Each primary tube 10 has for example one end connected to the first structural element 6 and one end connected to the second structural element 7 or one end connected to one of the first and second structural elements 6, 7 and one end connected to another tube 10 of the beam 8.

The beam 8 optionally comprises secondary tubes 10. The two ends of each secondary tube 10 are connected to other tubes 10 of the beam 8, each said other tube 10 being a primary tube 10 or another secondary tube 10. Such secondary tubes 10 are also designated as "braces".

The beam 8 is connected to the first and second structural elements 6, 7 via connections 16. Each connection 16 connects the end a primary tube 10 of the beam 8 to one of the first and second structural elements 6, 7.

The tank 12 is advantageously fluidly connected to fluid components 14 via the connections 16 between the beam 8 and the first and second structural elements 6, 7.

Each connection 16 with the first structural element 6 is a bolted flange connection and/or each connection 16 with the second structural element 7 is a bolted flange connection.

Preferably, as illustrated on Figure 1, each connection 16 with the first structural element 6 is a bolted flange connection and each connection 16 with the second structural element 7 is a bolted flange connection.

In a variant, each connection 16 with the first structural element 6 is a bolted flange connection and each connection 16 with the second structural element 7 is a welded connection.

In another variant, each connection 16 with the first structural element 6 is a welded connection and each connection 16 with the second structural element 7 is a bolted flange connection.

The connection of the beam 8 with the first structural element 6 and/or with the second structural element 7 via bolted flange connections 16 allows manufacturing the support structure 4 as separate modules, which are then assembled via the bolted flange connection(s) 16.

This makes manufacturing and maintenance easy, especially since the beam 10 integrates the tank 12 which implies the presence of fluid connections.

The beam 8 may have different arrangement of tubes 10, various number of connections 16 with each of the first and second structural elements 6, 7 and different arrangements of the tank 12 in the tubes 10 of the beam 8.

In some examples, a section of the tank 12 is delimited in at least one primary tube 10 of the beam 8. This allows an easy connection of the tank 12 to fluid equipment 14 via the connection of an end of the primary tube 10 with one of the first structural element 6 and the second structural element 7.

The primary tube 10 delimiting a section of the tank 12 has for example one end connected to the first structural element 6 and the other end connected to the second structural element 7 or has one end connected to the first structural element 6 and the other end connected to another tube 10, in particular another primary tube 10 or a secondary tube 10.

In some examples, the beam 8 comprises at least one primary tube 10 in which the tank 12 is not delimited. In particular the beam 8 comprises a primary tube 10 having one end connected to the first structural element 6 and the other end connected to the second structural element 7, in which the tank 12 is not delimited. This allows using such a primary tube 10 as a pontoon for operators two walk inside the primary tube 10 moving between the first structural element 6 and the second structural element 7.

In some examples, the tank 12 is delimited in at least one secondary tube 10 of the beam 8. The tank 12 is delimited for example in one single secondary tube 10 or in two or more secondary tubes 10.

In some examples, the beam 8 is connected to the first structural element 6 by one single connection 16 or two connections 16 and/or the beam 8 is connected to the second structural element 7 by one single connection 16 or two connections 16. The beam 8 is for example connected to the first and second structural elements 6, 7 via two, three or four connections 16.

In some examples, the beam 8 comprises two primary tubes 10 which are parallel and preferably horizontal, each of said two primary tube 10 having one end connected to each of the first structural element 6 by a connection 16 and one end connected to the second structural element 7 by a connection 16.

The beam also comprises at least one secondary tube 10, the secondary tube(s) 10 connecting the two primary tubes 10 together. For example, at least one or each secondary tube 10 extends between the two primary tubes 10 with having one end connected to one of the two primary tubes 10 and the other end connected to the other one of the two primary tubes 10.

The two primary tubes 10 are for example positioned one above the other, thus defining a lower primary tube 10 and an upper primary tube 10.

Advantageously, the tank 12 is delimited in at least one of the two primary tubes 10 and in at least one secondary tube 10. The tank 12 is for example delimited in one of the two primary tubes 10 and in at least one secondary tube 10 and the tank 12 is not delimited in the other one of the two primary tubes 10. The primary tube 10 in which the tank 12 is not delimited is preferably an upper primary tube 10.

The beam 8 comprises for example two secondary tubes 10 each extending between the two primary tubes 10. At least one or each secondary tube 10 extends for example obliquely with respect to the primary tubes 10. Advantageously, the distance between the ends of the two secondary tubes 10 connected to one of the two primary tubes 10, in particular a lower primary tube 10, is for example strictly smaller than the distance between the ends of the two secondary tubes 10 connected to the other primary tubes 10, in particular an upper primary tube 10.

As illustrated on Figure 1, the beam 8 advantageously comprises upper and lower primary tubes 10, each having one end connected to the first structural element 6 via a connection 16 and one end connected the second structural element 7 via a connection 16 and two secondary tubes 10, each secondary tube 10 extending between the two primary tubes 10.

The tank 12 is delimited in the lower primary tube 10 and is not delimited in the upper primary tube 10. The tank 12 is also delimited in the two secondary tubes 10.

The upper primary tube 10 can be used as a pontoon with avoiding the need for the operator to descend to the lower primary tube 10. In a variant, a section of the tank 12 is delimited in the upper primary tube 10 and is not delimited in the lower primary tube 10.

The tank 12 is for example connected to the first structural element 6 via the connection 16 between the upper primary tube 10 and the first structural element 6 and/or via the connection 16 between the lower primary tube 10 and the first structural element 6 and/or connected to the second structural element 7 via the connection 16 between the upper primary tube 10 and second structural element 7and/or via the connection 16 between the lower primary tube 10 and the second structural element 7.

As illustrated in Figure 1, the tank 12 is for example connected to the first structural element 6 via the connection 16 between the upper primary tube 10 and the first structural element 6 and/or connected to the second structural element 7 via the connection 16 between the upper primary tube 10 and second structural element 7.

In the example of Figure 1, the upper ends of the secondary tubes 10 are spaced apart and thus closer to the first structural element 6 and the second structural element 7, thus limiting the length of pipe necessary for making the fluid connection.

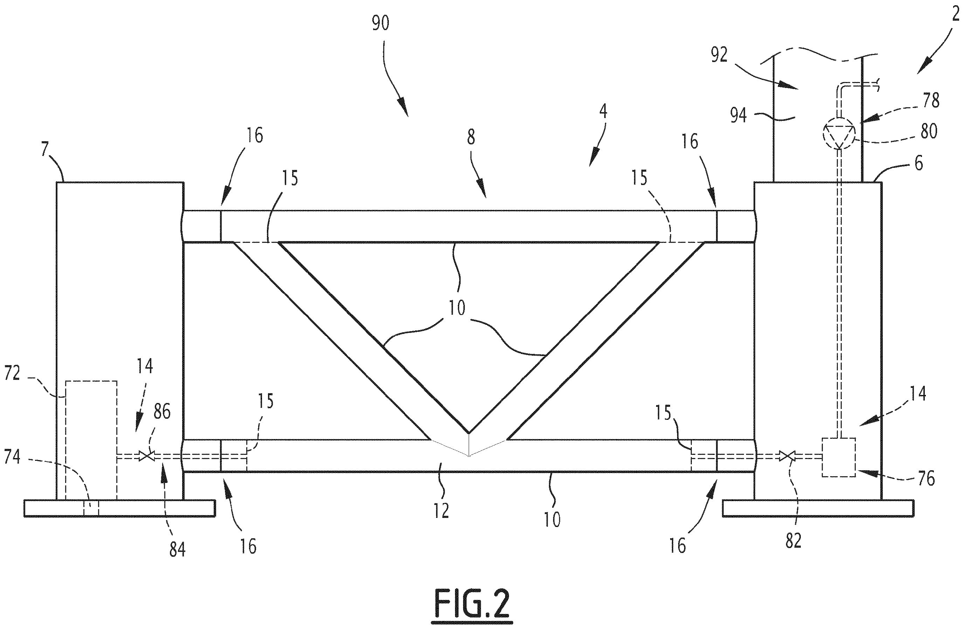

In a variant, as illustrated on Figure 2, the tank 12 is for example fluidly connected to the first and second structural elements 6, 7 via their connections 16 with the first lower primary tube 10, without fluid connection between the tank 12 and the first and second structural elements 6, 7 via their connections with the upper primary tube 10.

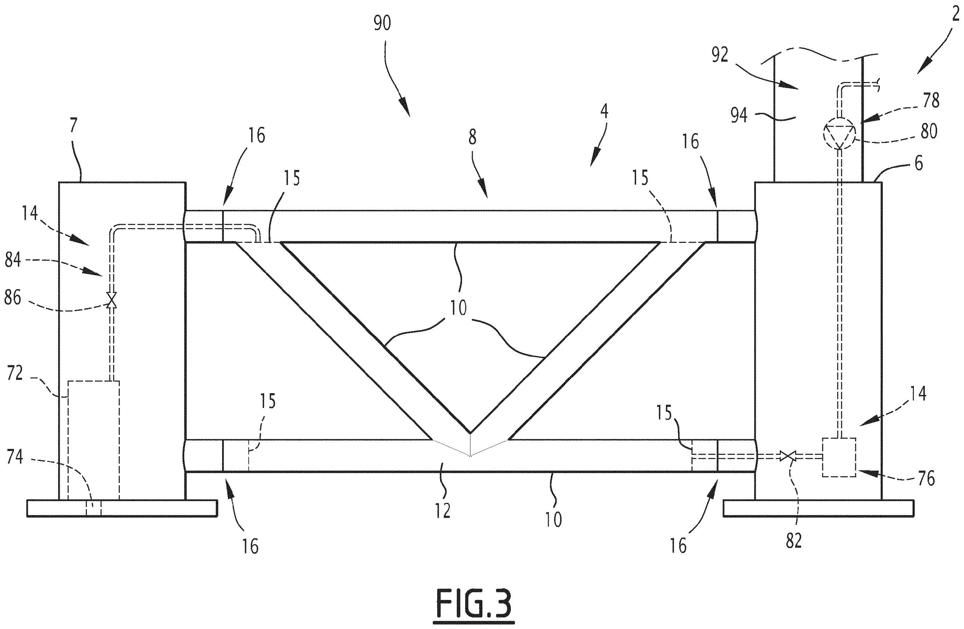

In a variant, as illustrated on Figure 3, the tank 12 is for example fluidly connected to the first structural element 6 via its connection with lower primary tube 10 without fluid connection between the tank 12 and the first structural element 6 via its connection 16 with the upper primary tube 10 and fluidly connected to the second structural element 7 via its connection with the upper primary tube 10 without fluid connection between the tank 12 and the second structural element 7 via its connection with the lower primary tube 10.

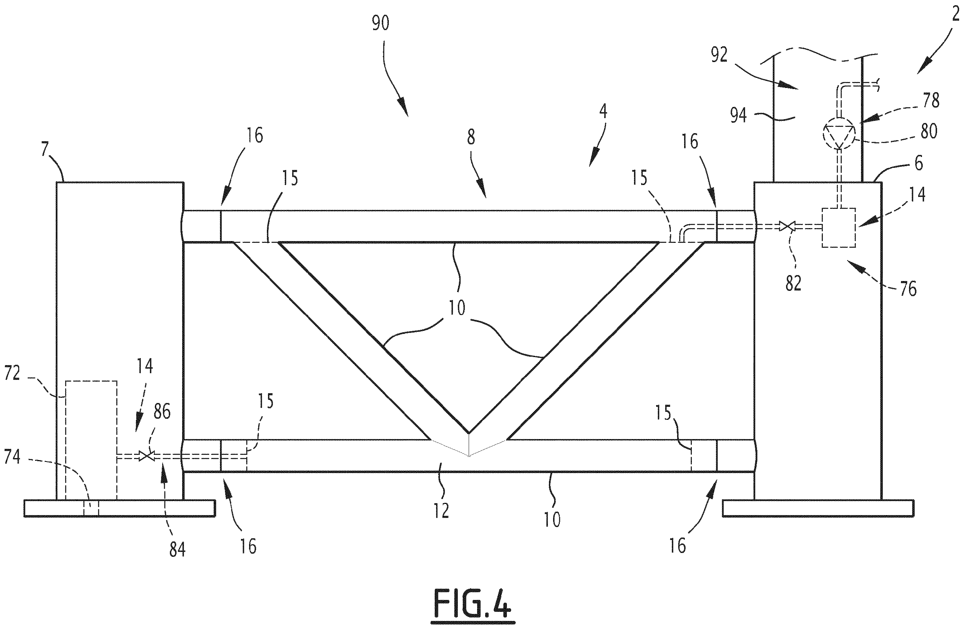

In a variant, as illustrated on Figure 4, the tank 12 is for example fluidly connected to the first structural element 6 via its connection with upper primary tube 10 without fluid connection between the tank 12 and the first structural element 6 via its connection with the lower primary tube 10 and fluidly connected to the second structural element 7 via its connection with the lower primary tube 10 without fluid connection between the tank 12 and the second structural element 7 via its connection with the upper primary tube 10.

The beam 8 may exhibits other shapes.

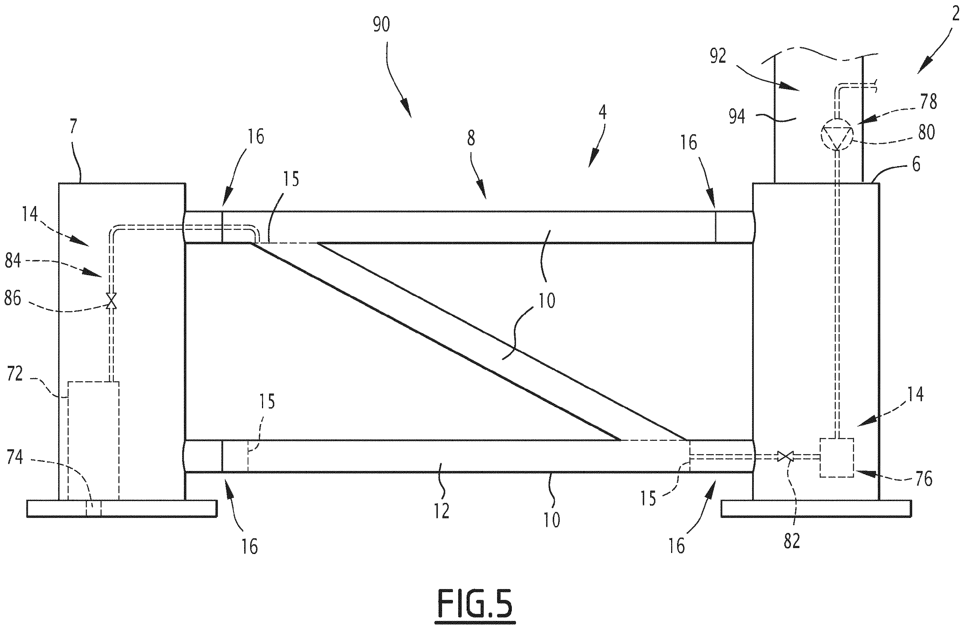

In some examples, as illustrated on Figure 5, the beam 8 differs from that of Figure 1 - 4 in that the beam 8 comprises one single secondary tube 10 extending obliquely between the two primary tubes 10. The tank 12 is delimited in the secondary tube 10 and at least one of the primary tube 10, for example only one of the two primary tubes 10, preferably the lower primary tube 10.

The secondary tube 10 extends from the end of the lower primary tube 10 connected to the first structural element 6 to the end of the upper primary tube 10 connected to the second structural element 7.

The tank 12 is for example fluidly connected to fluid components 14 via the lower connection 16 with the first structural element 6 and via the upper connection 16 with the second structural element 7.

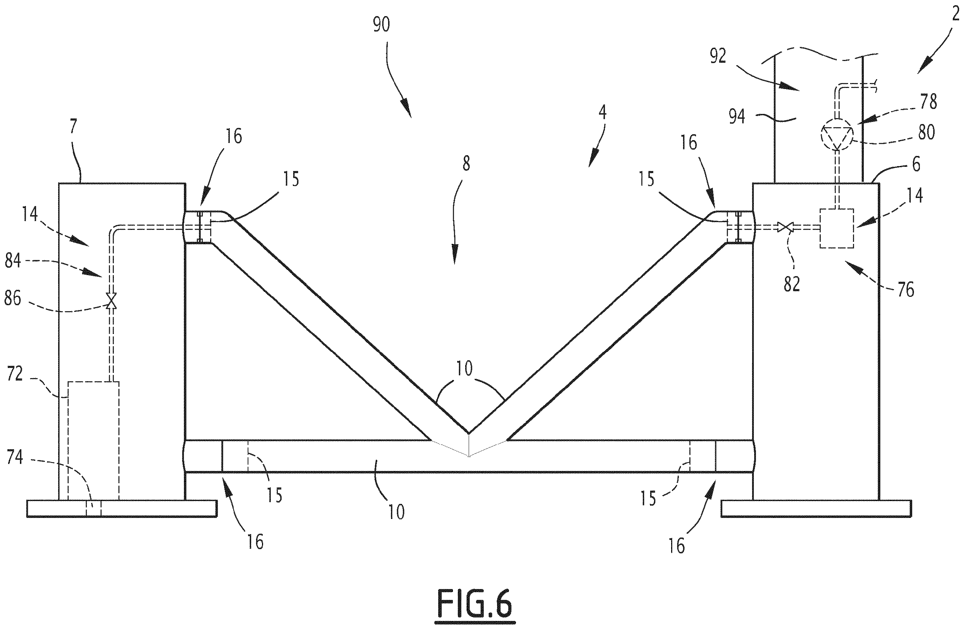

In some examples, as illustrated on Figure 6, the beam 8 differs from that of Figure 1 - 4 in that the beam 8 comprises a first primary tube 10 extending between the first and second structural elements 6, 7.

The beam 8 further comprises a second primary tube 10 extending between the first primary tube 10 and the first structural element 6 and/or a third primary tube 10 extending between the first primary tube 10 and the second structural element 7.

The beam 8 is connected to the first and second structural elements 6, 7 via three or four connections 16

The tank 12 is for example delimited in two or three tubes 10 among the first primary tube 10, the second primary tube 10 and the third primary tube 10. The tank 12 is for example delimited in the first primary tube 10 and in the second primary tube 10 and/or the third primary tube 10.

Each connection 16 is a welded connection or a bolted flange connection 16. Each connection 16 with the first structural element 6 is a bolted flange connection and/or each connection with the second structural element 7 is a bolted flange connection. Preferably, each connection 16 between the beam 8 and the first and second structural element 6, 7 is a bolted flange connection 16.

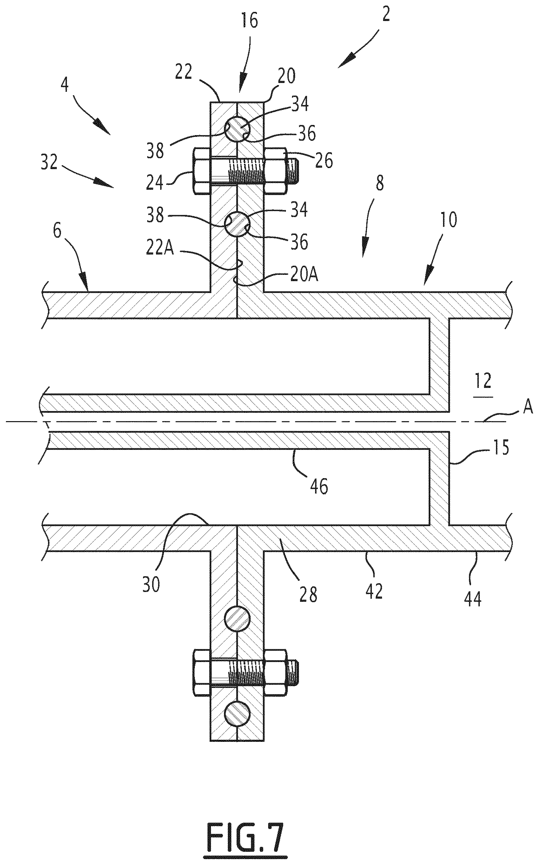

Examples of bolted flange connection 16 are illustrated on Figures 7 - 11 on which corresponding or similar elements are designated by the same numeral reference. In this respect, it is to be noticed that the numeral reference 6 of the first structural member 6 of Figures 1 - 6 is used on Figures 7-11 but that the observations below are applicable to the first structural member 6 or the second structural member 7.

As illustrated on Figure 7, the bolted flange connection 16 comprises a first flange 20 provided on the tube 10 and a second flange 22 provided on the structural element 6, the first flange 20 and the second flange 22 being bolted together.

The first flange 20 and the second flange 22 are annular. The first flange 20 and the second flange 22 extend around a central axis A of the bolted flange connection 16. The first flange 20 has a front face 20A and the second flange 22 has a front face 22A. The front face 20A of the first flange 20 faces the front face 22A of the second flange 22.

The first flange 20 and the second flange 22 are abutted axially one against the other and bolted one to the other via a plurality of bolts 24.

The bolts 24 are distributed circumferentially on the first flange 20 and the second flange 22 around the central axis A. The bolts 24 are distributed around the central axis A along one or several imaginary circles.

Only two diametrically opposed bolts 24 are visible on Figure 7. In practice, the bolted flange connection 16 comprise preferably more than two bolts 24. The number of bolts 24 is for example chosen as function of the diameter of the first and second flanges 20, 22.

The first flange 20 is provided at an end 28 of the tube 10. The second flange 22 is provided for example on a connection opening 30 of the structural member 6. The end 28 of the tube 10 and the connection opening 30 are preferably coaxial and centered on the central axis A of the bolted flange connection 16. The end 28 of the tube 10 and the connection opening 30 are preferably of circular cross-section and of same diameter.

The bolts 24 of the bolted flange connection 16 extend through the first flange 20 and the second flange 22 for fixing the first flange 20 and the second flange 22 together, each bolt 24 being for example engaged with a mating nut 26.

The first flange 20 and the second flange 22 extend for example radially outwardly from the tube 10 and the connection opening 30, as illustrated on Figure 7, or radially inwardly from the tube 10 and the connection opening 30.

The first flange 20 and the second flange 22 are for example in direct contact with each other, in particular in metal-to-metal contact with each other. More specifically the front face 20A of the first flange 20 and the front face 22A of the second flange 22 are in direct contact with each other. This ensure a reliable mechanical connection of the tube 10 and the structural element 6 via the bolted flange connection 16.

The bolted flange connection 16 comprises a sealing assembly 32 configured for sealing the bolted flange connection 16 in a watertight manner.

The sealing assembly 32 seals the junction between the tube 10 and the structural element 6.

The sealing assembly 32 is configured for preventing liquid and/or gas to enter and/or exit the support structure 4 via the bolted flange connection 16.

The sealing assembly 32 is advantageously configured for preventing water to enter the support structure 4 via the bolted flange connection 16 and/or for preventing liquid and/or gas contained in the tank 12, in particular pressurized gas contained in the tank 12 to exit the support structure 4 via the bolted flange connection 16.

The sealing assembly 32 comprises one or several sealing members, including for example one or several annular seals, one or several sealing washers and/or one or several sealing sleeves.

The sealing assembly 32 comprises for example at least one annular seal 34 interposed between the first flange 20 and the second flange 22 with being partly received in a first groove 36 formed in the first flange 20 and partly received in a second groove 38 formed in the second flange 22 or entirely received in a first groove 36 formed in the first flange 20 and in contact with the second flange 10 or entirely received in a second groove 38 formed in the second flange 22 and in contact with the first flange 20.

Each annular seal 34 is made for example of natural or synthetic rubber or elastomer.

As illustrated on Figure 7, the sealing assembly 32 comprises at least one annular seal 34, each annular seal 34 of the sealing assembly 32 being partly received in a first groove 36 formed in the first flange 20 and partly received in a second groove 38 formed in the second flange 22.

The sealing assembly 32 is preferably configured such that the first flange 20 and the second flange 22 are in contact with each other via their respective front faces 20A, 22A. Each annular seal 34 received in a first groove 36 and/or a second groove 38 allows a contact between the first flange 20 and the second flange 22 with an efficient sealing.

Preferably, the sealing assembly 32 is configured such that each annular seal 34 is compressed between the first flange 20 and the second flange 22.

In particular, the size and the shape of each annular seal 34 as well as the size and the shape of each groove receiving the annular seal 20 (first groove 36 and/or second groove 38) are configured for a compression of the annular seal 34 between the first flange 20 and the second flange 22.

Each annular seal 34 has for example a circular profile, an elliptical profile, a square profile, a rectangular profile or a trapezoidal profile in a free state of the annular seal 34, i.e. before compression between the first flange 20 and the second flange 22.

The sealing assembly 32 comprises for example two annular seals 34 arranged concentrically with being centered on the central axis A.

The sealing assembly 32 comprises for example one annular seal 34 located radially outwards relative to the bolts 24 and/or one annular seal 34 located radially inwards relative to the bolts 24.

The cross-section of a groove formed in the front face 20A of the first flange 20 or in the front face 22A of the second flange 22 for receiving at least partially or entirely an annular seal 34 may exhibit various profiles, such as a semi-circular profile, a square profile, a rectangular profile or a trapezoidal profile.

In one example, the tube 10 delimits the tank 12.

In such case, the tube 10 comprises advantageously a partition wall 15 extending across the tube 10 for delimiting the tank 12 in a section of the tube 10, the partition wall 15 being located along the tube 10 at a distance from the first flange 20. The tube 10 comprises a connection section 42 extending between the end 28 and the partition wall 15 and tank section 44 extending from the partition wall 15 opposite the end 28.

The provision of the partition wall 15 at a distance from the end 28 of the tube 10 connected to the structural element 6 by the bolted flange connection 16 improves the reliability as the bolted flange connection 16 which is not in contact with the fluid contained in the reservoir 30 and not subjected to the pressure of this fluid.

The support structure 4 comprises advantageously a connection pipe 46 for fluidly connecting the tank 12 to fluid components 14 (not shown on Figure 7).

The tank 12 is connected to said fluid components 14 via the bolted flange connection 16.

As illustrated on Figure 7, the connection pipe 46 extends from the partition wall 15 towards the structural element 6 for connecting the tank 12 to the fluid components 14.

The connection pipe 46 is connected to the fluid components 14 for example by a bolted connection or a welded connection or any other type of suitable connection.

The bolted flange connection 16 is not limited to the examples and variants discussed in reference to Figure 7.

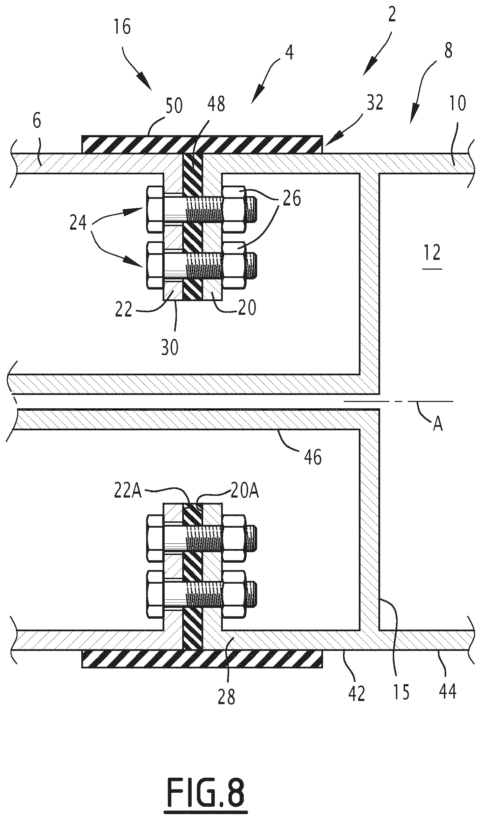

Other examples and variants may be contemplated as discussed below with reference to Figures 8-11.

In the bolted flange connection 16 of Figure 7, the first flange 20 and the second flange 22 protrude radially outwardly from the tube 10 and the connection opening 30 of structural element 6.

The bolted flange connection 16 of Figure 8 differs from that of Figure 7 in that the first flange 20 and the second flange 22 protrude radially inwardly from the tube 10 and the connection opening 30 of structural element 6. This configuration offers the advantage that the bolts 24 are located inside the bolted flange connection 16 and are thus protected from the outside elements, namely from the water.

The arrangements of the bolts 24 of the bolted flange connection 16 may be different to that of the bolted flange connection 16 of Figure 7.

The bolts 24 of the bolted flange connection 16 are arranged in one row of bolts 24 extending along an imaginary circle centered on the central axis A or several rows of bolts 24, each row extending along an imaginary circle centered on the central axis A, the rows being arranged concentrically around the central axis A.

The bolted flange connection 16 of Figure 8 differs from that of Figure 7 in that the bolted flange connection 16 comprises two rows of bolts 24 extending concentrically around the central axis A.

The sealing assembly 32 of the bolted flange connection 16 of the bolted flange of Figure 7 comprises one or several annular seals 34, each annular seal 34 being received in a first groove 36 and a second groove 38.

Alternatively or optionally, as illustrated on Figure 8, the bolted flange connection 16 comprises a sealing washer 48 which is interposed between the first flange 20 and the second flange 22 such that the first flange 20 and the second flange 22 bear against each other via the sealing washer 48 without contacting each other.

At least when compressed between the first flange 20 and the second flange 22, the sealing washer 48 is preferably flat shaped and extends radially relative to the central axis A. The bolts 14 of the bolted flange connection 16 extend for example through the sealing washer 48, via holes provided in the sealing washer 48.

The sealing washer 48 is for example made of metal, preferably a metal resisting to corrosion, in particular stainless steel or bronze, such as a bronze containing copper and in addition tin, zinc and/or aluminum.

Alternatively or optionally, as illustrated on Figure 8, the sealing assembly 32 comprises a sealing sleeve 50 arranged around the bolted flange connection 16.

The sealing sleeve 50 extends on the external surface of the tube 10 and on an external surface of the structural member 6 with covering the junction between the tube 10 and the structural member 6.

The sealing sleeve 50 is for example made of a flexible material. The sealing sleeve 50 made of a flexible material in conformable to the bolted flange connection 16. The sealing sleave 50 is for example wraped around the bolted flange connection 16.

The sealing sleeve 50 if for example made of one or several layers each made of rubber or made of a composite material comprising a matrix and reinforcement fibers embedded in the matrix.

The sealing sleeve 50 is for example obtained by wrapping the product Guard-Wrap^{™} of the company TRENTON around the bolted flange connection 16. The product Guard-Wrap^{™} comprises of a spunbonded polyester mat, saturated with microcrystalline wax that is laminated to a polyester film which is coated with microcrystalline wax.

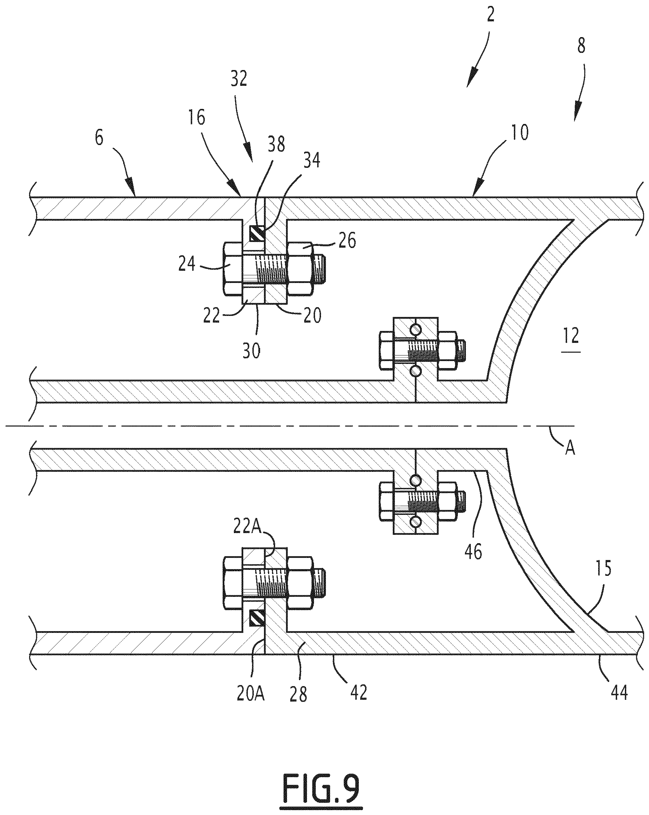

Alternatively or optionally, as illustrated on Figure 9, the sealing assembly 32 comprises an annular seal 34 that is entirely received in a groove provided in one of the first flange 20 with making a seal contact with the second flange 22 and/or an annular seal 34 that is entirely received in a groove provided in the second flange 22 with making a seal contact with the first flange 20

In particular, the sealing assembly 32 comprises an annular seal 34 which is entirely received in a second groove 38 formed in front face 22A of the second flange 22 with being in sealing contact with the front face 20A of the first flange 20A when the bolts 24 of the bolted flange connection 16 are tightened.

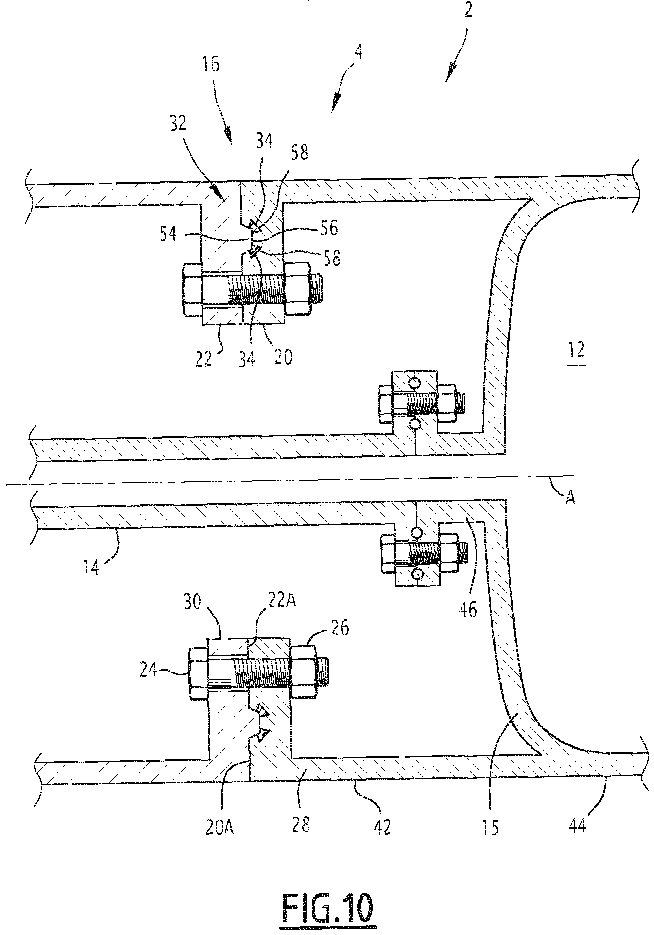

Alternatively or optionally, as illustrated on Figure 10, the sealing assembly 32 comprises an annular protrusion 54 formed on one among the first flange 20 and the second flange 22, the annular protrusion 54 engaging into a annular groove 56 formed in the other among the first flange 20 and the second flange 22, at least one annular seal 34 being optionally received in the annular groove 56 and compressed by the annular protrusion 54.

In particular, two annular seals 34 are for example received in the annular groove 56, each annular seal 34 being compressed by the annular protrusion 54 onto respective sealing seats 58, the two sealing seats 58 being preferably inclined relative to the central axis A and/or inclined one relative to the other.

The sealing assembly 32 comprises for example an annular protrusion 54 provided one the second flange 22 and an annular groove 56 provided on the first flange 20, two annular seals 34 being received in the annular groove 56 with being compressed in the annular groove 56 against respective sealing seats 58 inclined relative to the central axis A and inclined one relative to the other.

Each sealing seat 58 is for example frustoconical and centered on the central axis A, one sealing seat 58 facing radially outwardly and the other sealing seat 58 facing radially inwardly.

The half cone angle of each sealing seat 58 is for example comprises between 30° and 60° and in particular substantially equal to 45°.

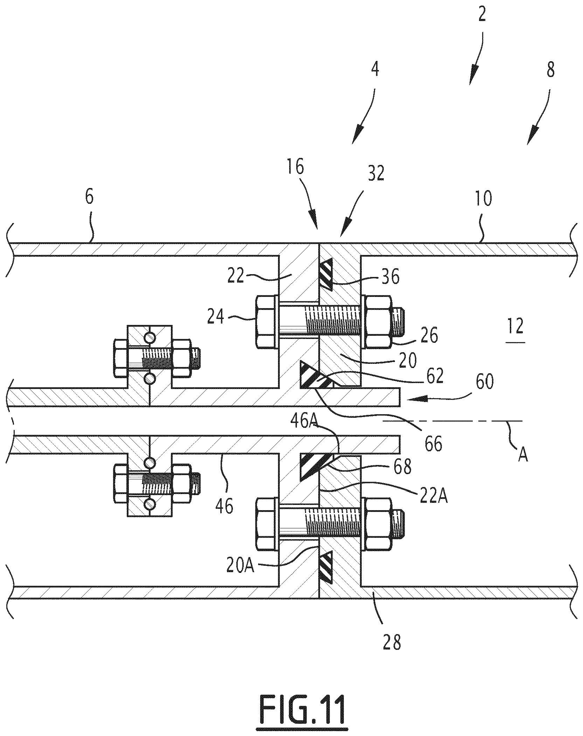

Alternatively or optionally, as illustrated on Figure 11, the sealing assembly 32 comprises for example an annular seal 34 which is partly or entirely received in a groove formed in front face 20A, 22A of one of the first flange 20 and the second flange 22, the groove being shape such that the annular seal 34 is locked in the groove.

The groove is for example shaped such that an opening of the groove is narrower that a bottom of the groove.

The groove exhibits for example a trapezoidal cross-section, with the two parallel sides of the trapezoidal cross-section defining the bottom and the opening of the first groove and the converging sides of the trapezoidal cross-section defining the sides of the first groove.

As illustrated on Figure 11, the sealing assembly 32 comprises for example an annular seal 34 which is entirely received in a first groove 36 formed in front face 20A of the first flange 20 with being in sealing contact with the front face 22A of the second flange 22.

The first groove 38 exhibits a trapezoidal cross-section, with the two parallel sides of the trapezoidal cross-section defining the bottom and the opening of the first groove 38 and the converging sides of the trapezoidal cross-section defining the sides of the first groove 38.

Optionally, sealing of the bolted flange connection 16 is achieved through application of a sealing coating (not shown) such as painting, preferably a resin, such as polyester or epoxy resins, optionally reinforced with glass and/or carbon fiber, either in the form of bulk or woven or non-woven fabric.

The sealing coating is applied for example on the first flange 20, on the second flange 22, at the junction between the tube 10 and the structural element 6 and/or on the bolts 24.

As illustrated on Figure 11, in addition or optionally, the support structure 4 comprises a sealing arrangement 60 for creating a seal between a connection pipe 46 for the fluid connection of the tank 12 and one among the first flange 20 and the second flange 22.

The sealing arrangement 60 comprises for example a sealing ring 62 wedged between an outer surface 46A of the connection pipe 46 and a sealing seat 64 of one among the first flange 20 and the second flange 22.

The sealing ring 62 comprises for example a cylindrical inner face 66 in contact with an outer face of the connection pipe 46 and/or a frustoconical outer surface 68 in contact with the sealing seat 64.

As illustrated on Figure 11, the connection pipe 46 is attached to the second flange 22, the sealing arrangement 60 being provided between the connection pipe 46 and the first flange 20 with the sealing ring 62 being fitted on the connection pipe 46 and wedged between the connection pipe 46 and the first flange 20.

As illustrated on Figures 1 - 6, the fluid components 14 of the floating offshore platform 2 define for example an attitude control system 70 configured for controlling the attitude of the floating offshore platform 2.

The attitude control system 70 comprises for example a ballast 72 arranged in the second structural element 7 defining a floater, the ballast 72 having a water opening 74 for allowing water to enter or exit the ballast 72 as a function of an amount of air contained in the ballast 72, and an fluid circuit 76 for controlling the amount of air contained in the ballast 72.

The tank 12 defines for example a pressurized air storage for storing air to be fed to the ballast 72 for increasing floatability of the second structural element 7 provided with the ballast 72 or storing air withdrawn from the ballast 72 to lower the floatability of the second structural element 7 provided with the ballast 72.

The fluid circuit 76 comprises for example an inlet fluid line 78 configured for feeding pressurized air to the tank 12.

The inlet fluid line 78 comprises for example a pump 80 fluidly connected to the tank 12 for feeding pressurized air to the tank 12.

The inlet fluid line 78 comprises for example one or several inlet valves 82 arranged for controlling the circulation of air between the pump 80 and the tank 12.

The fluid circuit 76 comprises for example a transfer line 84 configured for transferring air from the tank 12 to the ballast 62. The transfer fluid line 84 comprises for example one or several transfer valves 86 for controlling the transfer of air from the tank 12 to the ballast 72.

In operation, when it is needed to lower the floatability of the second structural element 7, air is released from the ballast 72 whereby water enters the ballast 72 via the water opening 74. When it is needed to increase the floatability of the second structural element 7, the fluid circuit 76 is controlled to feed air from the tank 12 to the ballast 72 whereby water contained in the ballast 72 is pushed outside the ballast 72 via the water opening 74. When it is needed to fill the tank 12, the fluid circuit 66 is controlled to feed air to the tank 12 by activating the pump 80.

As illustrated on Figure 1 - 6, the inlet fluid line 78 is arranged on the first structural element 6 and the transfer fluid line 84 is arranged on the second structural element 7.

The first and second structural elements 6, 7 connected by the beam 8 are advantageously two columns of the the floating offshore platform 2.

In some examples, the floating offshore platform 2 comprises three columns, each columns being connected to each one of the two other columns by a beam 8.

In some examples, the floating offshore platform 2 comprises two pairs of columns, the two columns of each pair being connected by a beam 8.

In some examples, the floating offshore platform 2 comprises one central columns and two, three or more peripheral columns distributed circumferentially around the central columns, each peripheral columns being connected to the central floater by a respective beam 8.

In such a case, the attitude control system 60 comprises advantageously one single pump 80 provided on the central column and fluidly connected to the tank 12 integrated in each beam 8 for feeding the tank 12 with pressurized air.

This allows limiting the number of fluid components, and thus easing the manufacturing, the inspection and the maintenance of the floating offshore platform 2.

The floating offshore platform 2 is preferably a floating offshore platform 2 of a wind turbine assembly 90 comprising a wind turbine 92 supported by the floating offshore platform 2, e.g. by the first structural element 6 of the floating offshore platform 2. The bottom end of a mast 94 of the wind turbine is visible on Figures 1 - 6.

Owing to the invention, it is possible to propose a floating offshore platform which is a compact and lightweight naval construction with simple and robust design along with ease of installation, operation and maintenance.

The tank 12 delimited inside at least two tubes 10 of the beam 8 allows providing the tank integrated within the beam with ease of installation, inspection and maintenance.

The tank 12 delimited inside at least two tubes 10 of the beam 8 allows providing a tanl 12 with a high storage volume. A tank 12 with higher storage volume allows storing a same quantity of pressurized gas as a tank 12 of lower storage capacity but at a lower storage pressure. This allows using more economical and/or reliable fluid components 14. In particular, it allows using a less powerful pump for filing the tank 12.

The tank 12 delimited inside at least two tubes 10 increases the fluid connection possibilities between the tank 12 on the one hand and the first and second structural members 6, 7 on the other hand.

The provision of at least three connections 16 between the beam 8 and the first and second structural element 6, 7 provides a support structure which is reliable.

The provision of one or several bolted flange connections 16 between the beam 8 and the first structural element 6 and/or between the beam 8 and the second structural element 7 impart a modular construction to the support structure 4 which is thus easy and cost effective to manufacture.

The provision of a sealing assembly on a bolted flange connection 16 avoids fluid ingress in the support structure 4 and/or fluid leakage out of the support structure 4, in particular when the support structure 4 is provided with the integrated tank 12.

It is possible to keep a primary tube 10 deprived of any section of the tank 12, e.g. for allowing inspection of the support structure 4 by an operator without the necessity of emptying the tank or for allowing to use said primary tube as a pontoon for walking from one of the first and second structural elements 6, 7 to the other.

The invention is suitable for use with any kind of floating offshore platform and in particular for floating offshore platform for a wind turbine.

## Claims

1. A floating offshore platform (2) comprising a support structure (4), the support structure (4) comprising a beam (8) configured for extending between a first structural element (6) and a second structural element (7) of the support structure (4), the beam (8) being formed of several tubes (10) connected together, the beam (8) comprising a tank (12) for storing fluid delimited within at least two tubes (10) of the beam (8), said at least two tubes being connected such that the individual internal volumes of said at least two tubes (10) are in fluid communication, and at least three connections (16), each connection (16) being configured for mechanically connecting an end of one tube (10) of the beam (8) to one of the first structural element (6) and the second structural element (7), wherein each connection (16) with the first structural element (6) is a bolted flange connection (16) and/or each connection (16) with the second structural element (7) is a bolted flange connection (16).

2. The floating offshore platform (2) as in claim 1, wherein the beam (8) comprise one or several primary tubes (10), each primary having one end to be connected to the first structural element (6) and/or one end to be connected to the second structural element (7).

3. The floating offshore platform (2) as in claim 2, wherein the tank (12) is delimited in at least one primary tube (10).

4. The floating offshore platform (2) as in claim 2 or 3, wherein the beam (8) comprises at least one primary tube (10) in which the tank (12) is not delimited.

5. The floating offshore platform (2) as in any one of claims 2-4, wherein the beam (8) comprises two primary tubes (10) arranged one below the other, each of said two primary tubes (10) having one end connected to the first structural element and one end connected to the second structural element.

6. The floating offshore platform (2) as in any one of claims 2-5, wherein the beam (8) comprise at least one secondary tube (10), the two ends of each secondary tube (10) being connected to other tubes (10) of the beam (8).

7. The floating offshore platform (2) as in claim 6, wherein the beam (8) comprise at least one secondary tube (10) having ends connected to two primary tubes (10).

8. The floating offshore platform (2) as in claim 6 or 7, wherein the tank (12) is delimited in at least one secondary tube (10).

9. The floating offshore platform (2) as in any one of the preceding claims, wherein the tank (12) is fluidly connected to the first structural element (6) via a connection (16) connecting the beam (8) to the first structural element (6) and/or the tank (12) is fluidly connected to the second structural element (7) via a connection (16) connecting the beam (8) to the second structural element (7).

10. The floating offshore platform (2) as in any one of the preceding claims, wherein the connections (16) comprise an upper first connection (16) and a lower first connection (16) connecting the beam to the first structural element (6).

11. The floating offshore platform (2) as in claim 10, wherein the tank (12) is fluidly connected to the first structural element (16) via the upper first connection (16) and/or via the lower first connection (16).

12. The floating offshore platform (2) wherein the connections (16) comprise an upper second connection (16) and a lower second connection (16) connecting the beam (8) to the second structural element (7).

13. The floating offshore platform (2) as in claim 12, wherein the tank (12) is fluidly connected to the second structural element (7) via the upper second connection (16) and/or via the lower second connection (16).

14. The floating offshore platform (2) as in any one of the preceding claims , wherein each bolted flange connection (16) is provided with a sealing assembly for sealing the bolted flange connection (16).

15. Wind turbine assembly comprising a floating offshore platform (2) as in any one of the preceding claims and a wind turbine supported by the floating offshore platform (2).
